# EUROPÄISCHE PATENTANMELDUNG

(11) **EP 2 255 901 A1**
(43) Veröffentlichungstag der Anmeldung: **01.12.2010**
(21) Anmeldenummer: 10164121.5
(22) Anmeldetag: 27.05.2010
(51) Int. Cl.: B21D 28/02, B21D 37/20, B23H 9/12

(54) **Stanzwerkzeug und Verfahren zur Herstellung desselben**

(30) Priorität: 27.05.2009 DE 102009022931
(71) Anmelder: CIP-Centrum für Innovative-Produktionssysteme GmbH I.G., 44263 Dortmund (DE)
(72) Erfinder: Edler von Graeve, Adolf, 44265 Dortmund (DE)
(74) Vertreter: Rüger, Barthelt & Abel Patentanwälte

(57) **Zusammenfassung**

Ein erfindungsgemäßes Stanzwerkzeug 1 oder auch ein Stanzfolgewerkzeug weisen zumindest einen oder auch mehrere Stanzstempel 7, 8, 9 auf, die an ihrem Arbeitsabschnitt 32, 33, 34 eine durch elektrochemisches Abtragen erzeugte Querschnittskontur aufweisen. Vorzugsweise sind die in der Schnittplatte 3 ausgebildeten Stanzöffnungen 28, 29, 30 ebenfalls durch elektrochemisches Abtragen erzeugt worden. Für die Herstellung der Stanzstempel 7, 8, 9 und der Schnittplatte 3 werden gesonderte unterschiedliche spezifisch gestaltete Elektroden 62, 64 verwendet. Dies ermöglicht die Bewegung des Elektrolyts mit hoher Geschwindigkeit bzw. hohem Druck und die Erzeugung hoher Abtragraten sowie gleichzeitig ausgezeichneter Materialoberflächen.

## Beschreibung

Die Erfindung betrifft ein Stanzwerkzeug und ein Herstellungsverfahren für dieses.

Zur Herstellung von aus Blech bestehenden Bauteilen, wie Steckern oder dergleichen, wie auch zur Herstellung anderer Teile aus Metall oder auch aus anderen Materialien, dienen häufig Stanzwerkzeuge, deren prinzipieller Grundaufbau immer wieder ähnlich ist. Zum Beispiel offenbart die DE-PS 10 04 578 ein solches Stanzwerkzeug, bestehend aus einem Unterwerkzeug und einem Oberwerkzeug. Zu dem Unterwerkzeug gehört eine Schnittplatte mit ebener Oberfläche und darin ausgebildeten Stanzöffnungen. Zu dem Oberwerkzeug gehört eine Abstreifplatte mit Führungsöffnungen, durch die die Schäfte von Stanzstempeln ragen. Die Stanzstempel sind mit ihren oberen Enden in einer Kopfplatte gehalten.

Ein Stanzwerkzeug gleichen Prinzips ist zum Beispiel auch aus der DE 28 14 967 zu entnehmen. Dieses Stanzwerkzeug umfasst außerdem noch von dem Unterwerkzeug aufragende Führungssäulen zur Führung des Oberwerkzeugs sowie Federmittel, die die Führungsplatte bei schließendem Werkzeug federnd gegen das Unterwerkzeug spannen und somit auch ein Blechteil festklemmen können. Prinzipiell können solche Stanzwerkzeuge dazu dienen, an einem Werkstück lediglich einen Stanzarbeitsschritt durchzuführen oder eine Bearbeitungsfolge vorzunehmen. Letztere Werkzeuge werden als Stanzfolgewerkzeuge oder auch als Folgeverbundwerkzeuge bezeichnet. Ein solches ist aus der DE 10 2006 041 494 B3 zu entnehmen. Das dort veranschaulichte Werkzeug dient zur Herstellung von Gleitlagerelementen, die aus einem Band ausgestanzt werden.

Die Standmenge, die Qualität der erzeugten Werkstücke und die Arbeitsgeschwindigkeit, d.h. die erzielbare Hubzahl, hängen erheblich von der im Werkzeugbau erreichten Präzision ab. Die Herstellung und Feinbearbeitung der Stanzwerkzeuge, insbesondere der Stanzstempel und der Schnittplatte und die Sicherstellung einer präzisen Führung dieser Teile in Bezug aufeinander, stellt jedoch einen erheblichen Kostenfaktor dar. Dies gilt insbesondere, wenn, wie für hohe Standmengen erforderlich, hochfeste Materialien für die Stanzstempel und/oder die Schnittplatte verwendet werden.

Zur präzisen Herstellung, insbesondere nicht runder Stanzstempel, ist zum Beispiel von der DE 102 60 110 B4 die Anwendung des Drahterodierverfahrens vorgeschlagen worden. Dieses beruht auf Funkenerosion. Der Stanzstempel wird durch einen gerade gespannten, ständig von einer Rolle nachlaufenden Draht auf ganzer Länge bearbeitet. Er hat dadurch entlang seiner gesamten Länge einen einheitlichen Querschnitt. Seine gesamte Außenumfangsfläche ist eine in Drahterodierverfahren erzeugte Schnittfläche. Auf eben solche Weise werden die in der Führungsplatte erforderliche passende Führungsöffnung und die Stanzöffnung in der Schnittplatte ausgebildet.

Mit diesem Verfahren kann eine hohe Bearbeitungsgenauigkeit erzielt werden. Es ist jedoch zeitraubend und materialintensiv. Außerdem wirken auf die im Drahterodierverfahren erzeugte Schnittfläche hohe Temperaturen von bis zu 3000°C ein. Dies kann nachteilige Auswirkungen für das verwendete Material des Stanzstempels und der Schnittplatte, insbesondere für deren Härte haben.

Weiter ist es aus der GB 988,545 bekannt, einen Stanzstempel, eine Schnittplatte, eine Abstreifplatte und ein Auswerferset herzustellen, indem der Stanzstempel und/oder der Auswerfer durch elektrochemisches Senken bearbeitet werden. Das Verfahren beruht darauf, dass von zwei zueinander komplementären Werkzeugteilen jeweils eines als Elektrode genutzt wird, die in den Rohling elektrochemisch einzusenken ist, der den anderen Werkzeugteil bilden soll.

Weiter ist es aus der GB 985,676 bekannt, die Werkzeugteile eines Abflanschwerkzeuges herzustellen, in dem der ringförmige Stanzstempel als Senkelektrode in einen Metallmonoblock elektrochemisch eingesenkt wird, um dort eine komplementäre Vertiefung zu erzeugen.

Davon ausgehend ist es Aufgabe der Erfindung, ein Konzept anzugeben, das die Herstellung von Stanzwerkzeugen und auch Folgeverbundwerkzeugen auf einfache Weise in hoher Qualität ermöglicht.

Das erfindungsgemäße Werkzeug kann der Metall- oder Kunststoffverarbeitung dienen. Es kann zur Verarbeitung von Blechen oder auch Kunststofffolien ausgelegt sein. Es umfasst als aktive Werkzeug-Bauteile Stempel und Matrizen, die durch Anwendung von elektrochemischen Metallabtragechnologien höchsten Qualitäts-Anforderungen genügen. Dieses Konzept ermöglicht eine hohe Einsparung von Herstellungsaufwand bei der Werkzeugherstellung.

Zu dem Werkzeug gehören mindestens ein Unterwerkzeug mit wenigstens einer Stanzöffnung sowie mindestens ein Stempel mit einem Arbeitsabschnitt, der dazu eingerichtet ist, in die Stanzöffnung einzutauchen, und der mit der Stanzöffnung einen Schneidspalt festlegt. Der Stanzstempel weist abgesehen von einem eventuell vorhandenen Kopf entlang seiner Länge mindestens zwei verschiedene Querschnittskonturen auf. Vorzugsweise unterscheiden sich die beiden Querschnittskonturen sowohl hinsichtlich ihrer Form als auch hinsichtlich ihrer Größe. Zusätzlich kann der Stanzstempel mit einem Kopf versehen sein, der zu seiner Befestigung dient.

Der Stanzstempel weist einen Schaft mit einer ersten Querschnittskontur und einen Arbeitsabschnitt mit einer zweiten Querschnittskontur auf, die sich von der Querschnittskontur des Schafts unterscheidet. Die Querschnittskontur des Arbeitsabschnitts ist durch ein elektrochemisches Abtrageverfahren erzeugt worden. Dieses kann mit einer flachen Blechelektrode durchgeführt werden, die eine dem Querschnitt des Arbeitsabschnitts entsprechende Öffnung aufweist. Das elektrochemische Abtrageverfahren ist im Arbeitsforschritt auf eine axial fortschreitende, in ihrer Axialausdehnung aber gleich bleibende Ringzone des Arbeitsabschnitts beschränkt.

Vorzugsweise ist die Querschnittskontur des Schafts in einem anderen Herstellungsverfahren z.B. in einem Schleifverfahren erzeugt worden. Der Arbeitsabschnitt und der Schaftabschnitt des Stempels bestehen aus dem gleichen Material. Sie sind nahtlos untereinander verbunden und bilden ein einstückiges Bauteil. Der Stanzstempel kann in endhartem Zustand bearbeitete werden. Insbesondere im Bereich der Schneidkanten tritt keine thermische Materialbelastung und keine Materialenthärtung auf.

Diese Stempelbauart hat zahlreiche Vorzüge. Der Stempel kann aus einem Rohling mit großer Härte herausgearbeitet werden. Ist ein zum Beispiel thermischer Härtevorgang erforderlich, kann dieser an dem Rohling ausgeführt werden. Etwaige Maßveränderungen, die beim thermischen Härten, beispielsweise durch Verzug, auftreten könnten, spielen für die Genauigkeit des Stanzwerkzeugs somit keine Rolle mehr. Außerdem hat das elektrochemische Abtrageverfahren keinen nennenswerten Wärmeeintrag in den Stanzstempel zur Folge. Härteveränderungen der Stanzstempeloberfläche sind deshalb durch das elektrochemische Abtragen nicht zu befürchten. Außerdem kann die Form, insbesondere die Querschnittskontur, des Arbeitsabschnitts in weiten Grenzen nahezu beliebig gestaltet werden. Es können Konturen hergestellt werden, die sich weder im Drahterodierverfahren noch im Schleifverfahren herstellen lassen. Insbesondere ist es möglich, einen geraden, stufenartigen Übergang zwischen dem Schaftabschnitt und dem Arbeitsabschnitt zu erzeugen. Weiter ist es möglich, entlang des Arbeitsabschnitts verschiedene Größen bzw. Flächeninhalte der Arbeitsteil-Querschnittskontur zu erzeugen. Dies kann beim elektrochemischen Abtragen z.B. durch unterschiedliche Stromstärken an verschiedenen Axialpositionen oder durch Variation anderer Prozessparameter, wie Vorschubgeschwindigkeit oder Elektrolytströmungsgeschwindigkeit erreicht werden.

Die Formgebung des Arbeitsabschnitts durch elektrochemisches Abtragen bietet den Vorzug, dass sowohl die Querschnittskontur als auch die Stirnfläche des Stanzstempels bearbeitet werden können, wenn dies erforderlich ist. Weiter können zum Beispiel filigrane, d.h. dünnwandige Querschnittskonturen an dem Arbeitsteil des Stanzstempels erzielt werden, die, wenn sie sich über eine größere Länge, beispielsweise den gesamten Schaft, erstrecken würden, keine ausreichende axiale Steifigkeit hätten. Auch kommen die Stempel gegebenenfalls ohne Führung in der Abstreifplatte aus - speziell geformte, an den oder die Stempel angepasste Führungsbuchsen sind überflüssig. Damit bietet das erfindungsgemäße Konzept eine Vielzahl neuer Gestaltungsmöglichkeiten für Stanzwerkzeuge und Folgeverbundwerkzeug, wobei sich die Fertigungspräzision erhöhen und der Fertigungsaufwand verringern lassen.

Die Bearbeitung des Stanzstempels an seinem Arbeitsabschnitt durch elektrochemisches Senken ermöglicht es, an einem Stanzstempel mehrere Arbeitsabschnitte auszubilden, die von einem gemeinsamen Schaft getragen werden. Damit ergeben sich weitere Gestaltungsfreiräume, beispielsweise zum gleichzeitigen Stanzen mehrere kleinerer sehr eng beieinander liegender Öffnungen.

Das vorgeschlagene Konzept kann auch bei Stanzwerkzeugen angewendet werden, deren Stanzstempel in einer Führungsbuchse geführt sind. Dadurch kann der Stanzstempel präzise so geführt werden, dass sein Arbeitsabschnitt genau in die Stanzöffnung trifft. Es ist aber auch möglich die Stanzstempel an der Kopfplatte auszurichten. Dazu kann an dem Stanzstempel, vorzugsweise an seiner oberen, von dem Arbeitsabschnitt weg liegenden Stirnseite, eine Bezugsfläche ausgebildet werden. Dieser Bezugsfläche kann an der Kopfplatte eine Anlagefläche zugeordnet sein, gegen die der Stanzstempel gespannt wird. Eine Führungsplatte zur Führung des Stanzstempels an seinem Schaft ist dann wie erwähnt überflüssig. Dieses Konzept kann zur Erstellung von Stanzwerkzeugen oder Stanzfolgewerkzeugen mit höherer Genauigkeit genutzt werden.

Die Bezugsfläche des Stanzstempels kann eine Planfläche sein. Zusätzlich kann an dem oberen vom Arbeitsabschnitt abliegenden Ende des Stanzstempels ein Formfortsatz ausgebildet sein, der in eine entsprechende Ausnehmung der Kopfplatte passt. Dadurch kann eine Verdrehsicherung des Stanzstempels erzielt werden. Diese Formfläche wird vorzugsweise durch elektrochemisches Abtragen erzeugt. Die zugehörige Vertiefung in der Kopfplatte kann ebenfalls durch elektrochemisches Abtragen erzeugt sein. Die an dem oberen Ende des Stanzstempels und in der Kopfplatte ausgebildeten Formen sind vorzugsweise komplementär zueinander. Die an dem Stempel ausgebildete Form kann zu ihrem Ende hin eine geringe Verjüngung aufweisen, um beim Einsetzen in die Kopfplatte einen Presssitz zu bewirken. Auf diese Weise können Stanzstempel lösbar oder auch permanent mit der Kopfplatte verbunden werden. Die Sicherung des oder der Stempel an der Kopfplatte kann durch Befestigungsschrauben oder auch stoffschlüssige Verbindungen, wie z.B. Hartlotverbindungen bewirkt werden.

Vorzugsweise werden die Stanzstempel des Stanzwerkzeugs oder des Stufenwerkzeugs an ihren Arbeitsteilen gleichzeitig durch elektrochemisches Abtragen bearbeitet. Vorzugsweise geschieht dies, wenn die Stanzstempel bereits an der Kopfplatte montiert sind. Dadurch lässt sich eine hohe Präzision nicht nur hinsichtlich der Formgebung der einzelnen Querschnittskonturen der Stanzstempel, sondern auch hinsichtlich ihrer Ausrichtung zueinander erzielen.

Beim elektrochemischen Abtragen, d.h. Herstellen der Querschnittskonturen der Stanzstempel wie auch bei dem Herstellen der Konturen der Stanzöffnungen der Schnittplatte, werden vorzugsweise gesonderte unterschiedliche Elektroden verwendet. Zur Herstellung der Querschnittskonturen der Stanzstempel dient vorzugsweise eine dünne aus einem Blech bestehende Elektrode mit Öffnungen, die die Querschnittskonturen der Arbeitsabschnitte der Stanzstempel bestimmen. Die Elektrode zum Herstellen der Stanzöffnungen in der Schnittplatte weist entsprechend geformte als Senkstempel dienende Vorsprünge auf. Vorzugsweise stimmen die Konturen der Öffnungen in dem Elektrodenblech und die Konturen der Senkstempel zur Herstellung der Schnittplatte miteinander nicht identisch überein. Vielmehr weisen sie entlang ihres jeweiligen Umfanges konstante oder auch variierende Maßzugaben auf. Durch Variation der Maßzugaben, insbesondere in Gebieten starker Krümmung der Querschnittskontur, können von der Querschnittskrümmung abhängige Ungleichmäßigkeiten bzw. Variationen der elektrochemischen Abtragerate kompensiert werden. So kann entlang des gesamten Umfangs der Schnittkontur eine konstante Schnittspaltweite erreicht werden.

Weitere Einzelheiten vorteilhafter Ausführungsformen der Erfindung sind Gegenstand der Zeichnung, der Beschreibung oder von Unteransprüchen. Die Beschreibung beschränkt sich auf wesentliche Aspekte der Erfindung sowie sonstiger Gegebenheiten. Die Zeichnung offenbart weitere Details und ist ergänzend heranzuziehen. Es zeigen:
Figur 1 ein Stanzwerkzeug, in Prinzipdarstellung und im Vertikalschnitt,
Figur 2 einen Stanzstempel des Stanzwerkzeugs nach Figur 1, in Stirnansicht,
Figur 3 eine abgewandelte Ausführungsform des Stanzwerkzeugs in teilweise geschnittener Seitenansicht,
Figur 4 einen Stanzstempel des Stanzwerkzeugs nach Figur 3, in Stirnansicht,
Figur 5 und 6 abgewandelte Ausführungsformen der Stanzstempel und der Kopfplatte für ein Stanzwerkzeug, zum Beispiel gemäß Figur 3,
Figur 7 einen Prozessschritt während der Herstellung der Stanzstempel nach Figur 5,
Figur 8 das Detail X aus Figur 7 in vergrößerter Prinzipdarstellung,
Figur 9 einen Prozessschritt beim Herstellen der Stanzöffnung in einer Schnittplatte in Prinzipdarstellung,
Figur 10 Senkelektrode und Schnittplatte in einem Eckbereich der herzustellenden Stanzöffnung, im Querschnitt und
Figur 11 das Detail Y aus Figur 7 in vergrößerter ausschnittsweiser Ansicht.

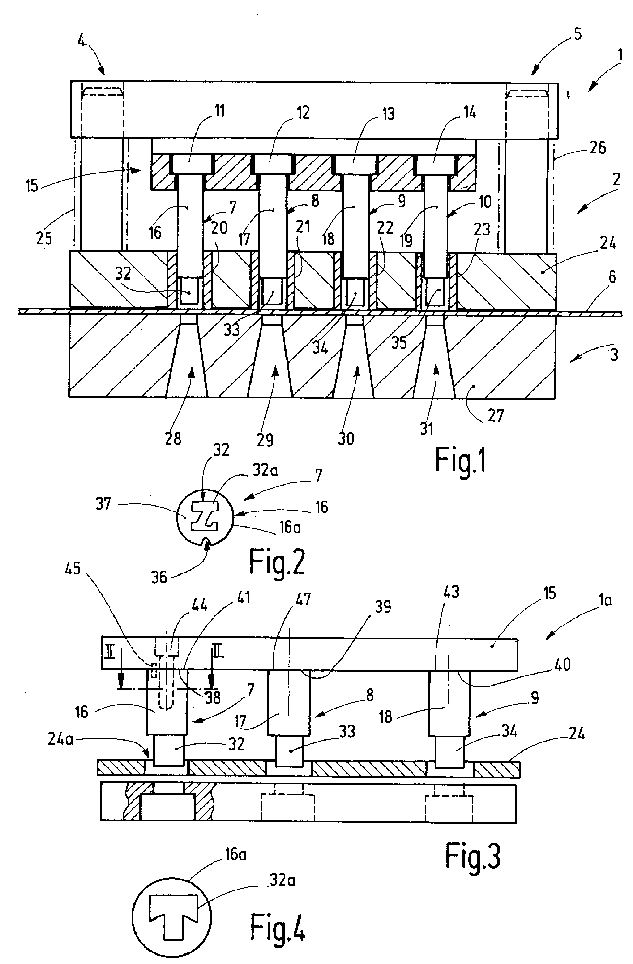

In Figur 1 ist als Beispiel für ein erfindungsgemäßes Werkzeug ein Stanzwerkzeug 1 veranschaulicht, zu dem ein oberer Werkzeugteil 2 und ein unterer Werkzeugteil 3 gehören. Vorliegend ist außerdem noch eine Führungseinrichtung 4, 5 vorgesehen, um den oberen Werkzeugteil 2 an dem unteren Werkzeugteil 3 zu führen. Der obere Werkzeugteil 2 ist mit einem nicht dargestellten Pressenstößel verbunden, während der untere Werkzeugteil 3 auf einem nicht dargestellten Pressentisch montiert wird.

Das als Beispiel schematisch dargestellte Stanzwerkzeug 1 ist ein reines Stanzwerkzeug. Es kann zum Beispiel ein Folgewerkzeug sein, um aus einem Blechband 6 in mehreren Stanzoperationen Teile schrittweise auszustanzen. In diesem Fall ist das untere Werkzeugteil 3 eine reine Schnittplatte. Es kann aber auch als Folgeverbundwerkzeug ausgebildet werden, in dem Teile sowohl freigestanzt als auch umgeformt werden. Das untere Werkzeugteil bildet eine Matrize mit mindestens einer Stanzöffnung und darüber hinaus mindestens einer Gravur. Der obere Werkzeugteil weist dann Stanzstempel und andere Stempel auf. Das Stanzwerkzeug 1 ist insoweit lediglich schematisch veranschaulicht.

Das Stanzwerkzeug 1 kann einen oder mehrere Stempel 7, 8, 9, 10 aufweisen, die miteinander übereinstimmend oder auch unterschiedlich ausgebildet sein können. Die Stempel 7, 8, 9, 10 sind mit ihren Köpfen 11, 12, 13, 14 in einer Kopfplatte 15 gehalten, die zu dem oberen Werkzeugteil 2 gehört. Aus der Kopfplatte heraus erstrecken sich Schäfte 16 bis 19 in Führungsbuchsen 20 bis 23 einer Abstreifplatte 24. Diese ist durch Federmittel 25, 26 von der Kopfplatte 15 weg vorgespannt. Die Federmittel 25, 26 sind beispielsweise Tellerfedern, Schraubenfedern oder dergleichen. Die Schäfte 16 bis 19 sind beispielsweise im Wesentlichen zylindrisch ausgebildet. Entsprechend weisen die Führungsbuchsen 20 bis 23 jeweils einen zylindrischen Durchgang zur spielarmen Führung des Schafts auf.

Zu dem unteren Werkzeugteil 3 gehört hier im Wesentlichen eine Schnittplatte 27 mit Stanzöffnungen 28, 29, 30, 31. Die Stanzöffnungen 28 bis 31 wirken mit Arbeitsabschnitten 32 bis 35 der Stempel 7 bis 10 zusammen. Die axiale Länge des Arbeitsabschnitts ist vorzugsweise nur wenig größer als Eintauchtiefe des Arbeitsabschnitts 32 in die Stanzöffnung 28 zuzüglich Zugabe für die Materialdicke des Stanzguts (Blechband 6). Jeder Arbeitsabschnitt weist eine im Wesentlichen mit der Stanzöffnung übereinstimmende Querschnittskontur auf, wobei die Querschnittskonturen der Stanzöffnungen 28 bis 31 um das Maß des gewünschten Schneidspalts größer als die jeweilige Querschnittskontur jedes Arbeitsabschnitts 32 bis 35 ist.

In Figur 2 ist der Stempel 7 (ohne seinen Kopf 11) in einer Ansicht mit Blickrichtung auf seine untere Stirnseite dargestellt. Wie ersichtlich, weist der Schaft 16 eine Querschnittskontur 16a auf. Der Arbeitsabschnitt 32 weist eine Querschnittskontur 32a auf. Die Querschnittskonturen 16a und 32a unterscheiden sich grundlegend sowohl hinsichtlich ihrer Form wie auch hinsichtlich ihrer Größe. Die Querschnittskontur 16a des Schafts 16 ist beispielsweise eine Kreisform oder, wie dargestellt, eine Kreisform mit Führungsnut 36 zur Verdrehsicherung oder eine andere einfache Grundform, die an einem zur Herstellung des Stempels 7 dienende Rohling vorhanden ist oder erzeugt worden ist. Zur Erzeugung dieser Querschnittskontur 16a können alle kostengünstigen Fertigungsverfahren, wie beispielsweise Schleifen, Drehen, Fräsen oder dergleichen eingesetzt werden.

Die Querschnittskontur 32a ist hingegen durch elektrochemisches Abtragen erzeugt worden. Wie die in Figur 2 beispielhaft dargestellte Z-Kontur zeigt, können dabei nahezu beliebige Querschnittskonturen erzeugt werden, die auch Hinterschneidungen haben können und mit anderen Herstellungsverfahren so nicht erzeugt werden können. Die Querschnittskontur 32a ist auf den Arbeitsabschnitt 32 beschränkt. Der Arbeitsabschnitt 32 geht in einer geraden oder auch schrägen Stufe 37 in den Schaft 16 über.

Figur 3 veranschaulicht ein abgewandeltes Stanzwerkzeug 1a, dass sich die Vorzüge des erfindungsgemäßen Konzepts weiter zunutze macht. Wiederum sind Stempel 7, 8, 9 an der Kopfplatte 15 gehalten. Allerdings dient die Kopfplatte 15 hier nicht nur zur Lagerung und axialen Betätigung der Stempel 7, 8, 9, sondern auch zu deren axialer Ausrichtung. Dazu sind die Stempel 7, 8, 9 an ihrem jeweiligen oberen von dem Arbeitsabschnitt 32, 33, 34 abliegenden Ende mit einer Bezugsfläche 38, 39, 40 versehen, die zum Beispiel als Planfläche ausgebildet sein kann. Den Bezugsflächen 38, 39, 40 ist an der Kopfplatte 15 jeweils eine Anlagefläche 41, 42, 43 zugeordnet, die zum Beispiel geschliffen oder anderweitig feinbearbeitet sein kann, um die Stempel 7, 8, 9 wie gewünscht präzise auszurichten. Zur Befestigung der Stempel 7, 8, 9 können, wie in Figur 3 anhand des Stempels 7 angedeutet ist, Bolzen 44 dienen, die zum Beispiel eine stirnseitig axial eingebrachte Befestigungsbohrung des Stempels 7 (8,9) eingeschraubt sind und die Kopfplatte 15 durchgreifen. Der Bolzen 44 spannt die Bezugsfläche 38 des Stempels 7 gegen die Kopfplatte 15.

Die Stempel 7, 8, 9 können Stanzstempel oder auch Umformstempel sein.

Bei unrundem oder exzentrischem Arbeitsabschnitt 32 kann eine Verdrehsicherung für den Stempel 7 vorgesehen sein. Eine solche Verdrehsicherung kann beispielsweise ein zu dem Stempel 7 exzentrisch angeordneter Stift 45 sein, der in Sackbohrungen der Kopfplatte 15 und des Stempels 7 sitzt.

Figur 4 veranschaulicht wiederum die Querschnittskonturen 32a und 16a. Die Abstreif- oder Niederhalterplatte 25 kann, wie Figur 3 zeigt, bei dieser Ausführungsform mit relativ weiten Öffnungen versehen sein, durch die die Stempel 7, 8, 9 auch mit ihren Schäften 16, 17, 18 hindurch tauchen können ohne die Berandungen der Öffnungen der Abstreifplatte 24 zu berühren. Sie kann auch entfallen.

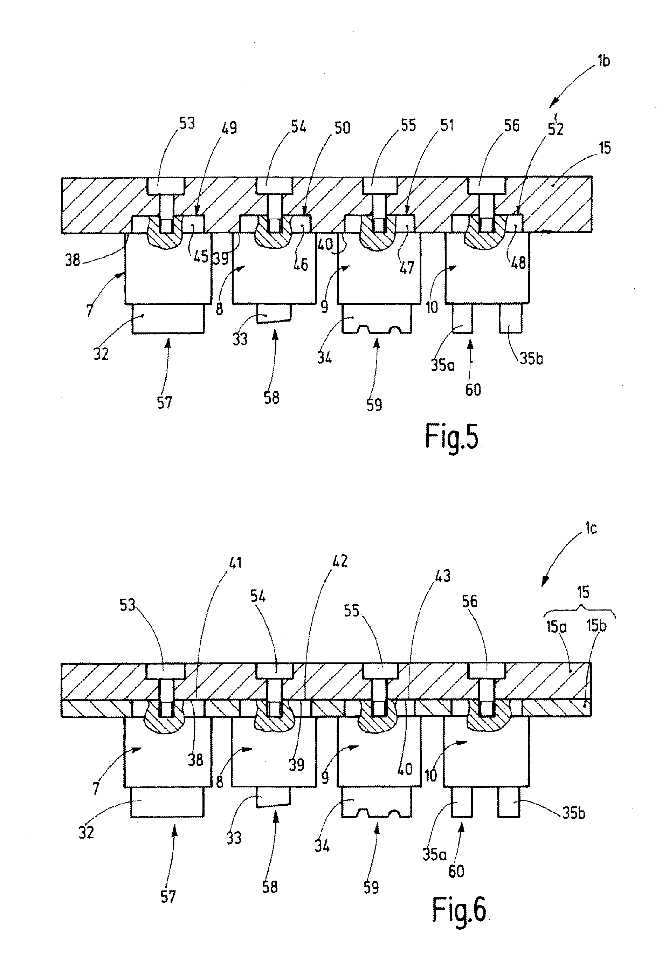

Figur 5 veranschaulicht eine weitere Ausführungsform der Erfindung in Gestalt der Kopfplatte 15 und der Stempel 7, 8, 9, 10 eines insoweit im Ausschnitt des dargestellten Folgewerkzeugs 1b. Bei dieser Ausführungsform weisen die Stempel 7 bis 10 an ihren oberen der Kopfplatte 15 zugewandten Ende unrunde, beispielsweise prismatische, Fortsätze 45, 46, 47, 48 auf, die von den Bezugsflächen 38, 39, 40 aufragen und dabei selbst einen Abschnitt der jeweiligen Bezugsfläche bilden. Die Fortsätze 45 bis 48 bilden Formflächen, die mit entsprechenden Vertiefungen 49, 50, 51, 52 eine Formschlussverbindung bilden.

Die Vertiefungen 49 bis 52 sind beispielsweise durch elektrochemisches Senken in die Unterseite der Kopfplatte 15 eingebracht worden. Ebenso können die Fortsätze 45 bis 48 durch elektrochemisches Senken an den oberen Enden der Stanzstempel 7 bis 10 ausgebildet worden sein. Wiederum können Befestigungsbolzen 53, 54, 55, 56, die die Kopfplatte 15 durchgreifen in entsprechende axiale Gewindebohrungen der Stanzstempel 7 bis 10 eingeschraubt worden sein, um die Stanzstempel 7 bis 10 an der Kopfplatte 15 festzuspannen. Alternative Befestigungsmittel sind anwendbar. Z.B. können die Formfortsätze 45 bis 48 in die Vertiefungen 49 bis 52 eingelötet sein. Es kann ein spaltfüllendes Hartlot Anwendung finden.

Alternativ kann die Kopfplatte 15 auch zweiteilig ausgebildet sein, wie es Figur 6 am Stanzwerkzeug 1c zeigt. Dort ist die Kopfplatte 15 in eine obere ebene Kopfplatte 15a und eine untere als Schablone mit Durchgangsöffnungen ausgebildete Kopfplatte 15b unterteilt. Die Kopfplatte 15b dient der drehfesten Ausrichtungen der einzelnen Stanzstempel 7, 8, 9, 10 und zur Festlegung von deren Abständen. Die Kopfplatte 15a kann wiederum der winkelmäßigen Ausrichtung der einzelnen Stanzstempel 7 bis 10 dienen, die mit ihrer oberen als Bezugsflächen 38, 39, 40 dienenden Stirnfläche an der planen Unterseite der Kopfplatte 15a anliegt, wodurch die Anlageflächen 41, 42, 43 bereitgestellt werden. Die Öffnungen der Schablone können mit jedem geeigneten Fertigungsverfahren, insbesondere elektrochemischem Senken oder auch Draherodieren erzeugt werden. Alle im Zusammenhang mit Fig. 5 genannten Stempelbefestigungen sind auch hier anwendbar.

Außerdem können, wie schon bei der Ausführungsform nach Figur 5, die Arbeitsabschnitte 32, 33, 34, 35 sowohl in ihrer Kontur als auch an ihren Stirnflächen 57, 58, 59, 60 durch elektrochemisches Senken bearbeitet worden sein. Damit können von den Stanzstempeln 7 bis 10 nicht nur Stanzoperationen, sondern auch sonstige Umformoperationen durchgeführt werden. In der Schnittplatte sind dann die entsprechenden Gegenformen ausgebildet.

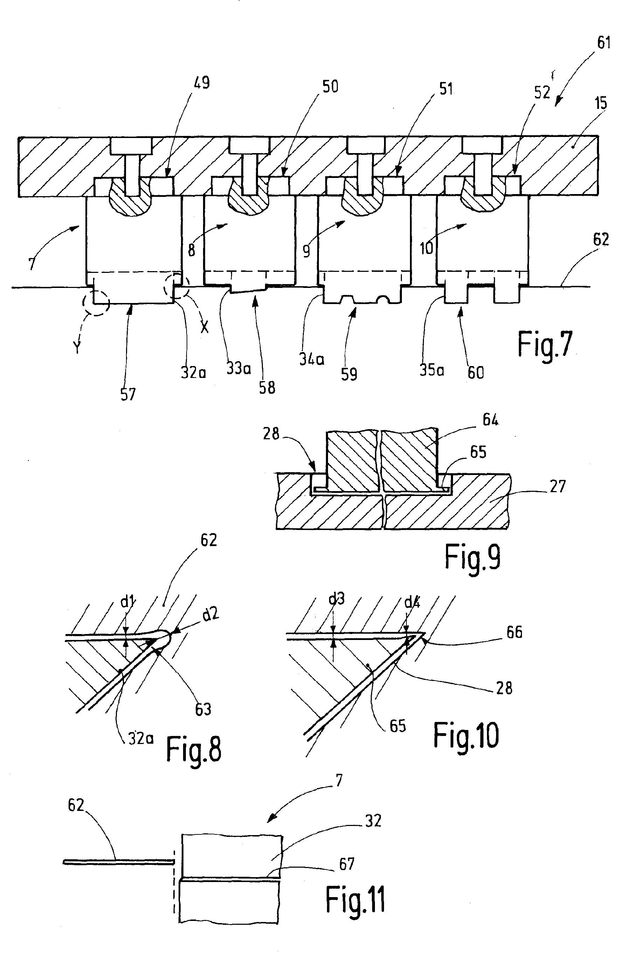

Zur Herstellung der Stanzwerkzeuge 1, 1a, 1b, 1c können die Stanzstempel 7 bis 10 jeweils einzeln hergestellt werden, indem jeweils ein beispielsweise zylinderförmiger Rohling bereitgestellt, lagerichtig eingespannt und dann an seinen Arbeitsabschnitt 32 bis 35 einem elektrochemischen Senkvorgang unterzogen wird. Es wird aber bevorzugt, die einzelnen Stanzstempel 7 bis 10 in einem einzigen Arbeitsgang gleichzeitig zu erzeugen. Dazu werden die Stanzstempel 7, 8, 9, 10, wie in Figur 7 veranschaulicht, von einem Halter 61 aufgenommen, der zum Beispiel durch die Kopfplatte 15 gebildet werden kann. Falls die Kopfplatte 15 entsprechende Formvertiefungen 49 bis 52 für die oberen Enden der Stanzstempel 7 bis 10 aufweist, die zum durch chemisches Senken hergestellt worden sind, werden die Rohlinge der Stanzstempel 7 bis 10 an ihren entsprechenden oberen Enden zunächst jeweils mit den komplementären Formen versehen. Dies kann in einem elektrochemischen Senkvorgang geschehen. Anschließend werden die soweit vorbereiteten Stanzstempelrohlinge mit der Kopplatte 15 oder auch einem provisorischen Halter verschraubt.

Im nächsten Arbeitsvorgang wird der aus der Kopfplatte 15 (oder einem provisorischen Halter) und den Stanzstempel 7, 8, 9, 10 bestehende Block mit einer Elektrode 62 in Wirkverbindung gebracht. Die Elektrode 62 weist Öffnungen auf, deren Form dazu geeignet ist die entsprechenden Querschnittskonturen 32a, 33a, 34a, 35a zu erzeugen. Der Spalt zwischen der Elektrode 62 und den Stanzstempeln 7, 8, 9, 10 wird von einem Elektrolyt durchströmt. Zwischen der Elektrode 62 und den Stanzstempeln 7, 8, 9, 10 fließt ein Strom durch den Elektrolyten. Der Stromfluss und die Elektrolytströmung führen zum kontrollierten Materialabtrag an den Stanzstempeln 7, 8, 9, 10 bzw. deren Rohlingen. Die aus einem dünnen Blech bestehende Elektrode 62 erzeugt die Querschnittskonturen 32a bis 35a. Eine weitere Elektrode kann dazu dienen die Stirnflächen 57, 58, 59, 60 zu bearbeiten. Letztere Elektrode ist in Figur 7 nicht veranschaulicht.

In Figur 7 ist die Stelle X markiert, an der die Querschnittskontur 32a eine Ecke haben kann. Figur 8 veranschaulicht eine solche Ecke 63. Wie ersichtlich, weist die in der Elektrode 62 vorgesehene Öffnung eine Kontur auf, die von der zu erzeugenden Querschnittskontur 32a um ein Spaltmaß d1 abweicht. Die Kontur wird vorzugsweise von einer schmalen Kante gebildet. Diese dient dem definierten Materialabtrag zur Herstellung der Stempelflanken in der gewünschten Oberflächenqualität und Maßhaltigkeit. An der Ecke 63 kann sich das Spaltmaß zum Beispiel auf einen zweiten Wert d2 ändern, um das die elektrochemische Abtragung beeinflussende elektrische Feld an der Ecke 63 auf gewünschte Weise zu beeinflussen. Die Spaltweite d2 kann größer oder auch kleiner sein als die sonstige Spaltweite d1.

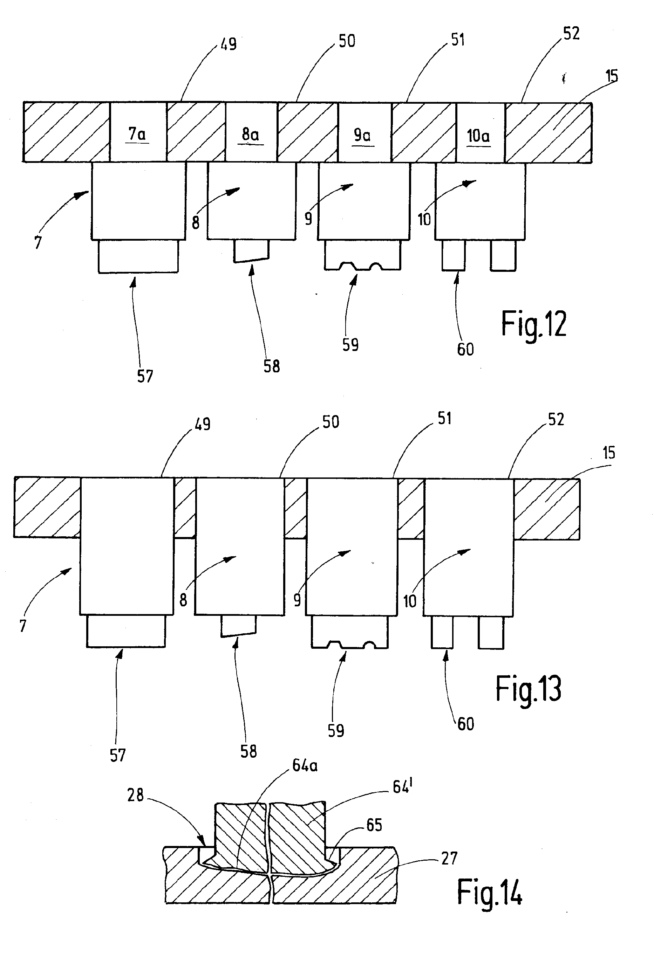

Figur 9 veranschaulicht den komplementären Vorgang zur Herstellung der Stanzöffnung 28 in der Schnittplatte 27. Zur Herstellung dient ein Stempel 64, der als Elektrode dient und insbesondere zur Bearbeitung der Wandung der Stanzöffnung 28 an seiner unteren Stirn einen entsprechenden Flansch 65 aufweist. Dieser erstreckt sich in Radialrichtung. In dem Stempel 64 können außerdem ein oder mehrere Kanäle zur Zu- oder Abführung von Elektrolyt vorgesehen sein. Wie Figur 14 veranschaulicht, kann ein ähnlicher Stempel 64' auch zur Herstellung von Formnestern (Gravuren) genutzt werden. Der Stempel 64' weist eine Stirn 64a auf, die nahtlos an die scharfe äußere Kante des Flanschs 65 anschließt und deren Form in das Unterwerkzeug 27 eingesekt wird.

Figur 10 veranschaulicht einen Teil der in Entstehung begriffenen Stanzöffnung 28 und insbesondere einen Eckbereich 66, derselben. Der Flansch 65 begrenzt mit der Wandung der Stanzöffnung 28 einen definierten Spalt mit der Spaltweite D3. Um eine gewünschte Form der Stanzöffnung 28 zu erreichen, kann in einem Gebiet größerer Oberflächenkrümmung beispielsweise in der Ecke 66 die Spaltweite d4 von der Spaltweite d3 in Gebieten geringere Oberflächenkrümmung abweichen.

Wie der Vergleich der Figuren 8 und 10 zeigt, weisen die Durchbrüche der Elektrode 62 somit eine etwas andere Form auf als die Umrisse des zugeordneten Flansches 65. Außerdem weichen die Öffnung der Elektrode 62 und der Umriss des Flansches 65 in ihrer Größe vorzugsweise etwas voneinander ab, um einen definierten Schnittspalt zu erzeugen. Der Flansch 65 läuft vorzugsweise in einer schmalen, fast scharfen Kante aus.

Figur 11 veranschaulicht noch, wie durch geeignete Prozessführung beispielsweise an dem Stanzstempel 7 ein Arbeitsabschnitt 32 ausgebildet werden kann, dessen Flanken in Axialrichtung gesehen, nicht gerade sind, sondern beispielsweise einen Absatz 67 aufweist. Dieser kann z.B. erzeugt werden, indem die Vorschubgeschwindigkeit mit der der Rohling des Stanzstempels 7 und die Elektrode 62 gegeneinander bewegt werden, die Stromstärke, die Strömungsgeschwindigkeit des Elektrolyts oder ein sonstiger Prozessparameter im Verlauf des Arbeitsprozesses gezielt verändert werden.

Figur 12 veranschaulicht eine abgewandelte Ausführungsform einer Kopfplatte mit Stanzstempeln 7 bis 10. Die Stanzstempel 7, 8, 9, 10 sind, wie in Figur 12 veranschaulicht, fest mit der Kopfplatte 15 verbunden. Die Stanzstempel 7 bis 10 sind an ihren oberen Enden mit Schaftfortsätzen 7a, 8a, 9, 10a versehen, die sich in entsprechende Löcher der Kopfplatte 15 hinein erstrecken. Die Schaftfortsätze 7a, 8a, 9, 10a können einen runden oder alternativ einen unrunden Querschnitt aufweisen. Sie gehen vorzugsweise jeweils in einer ebenen Ringschulter in den Schaft des jeweiligen Stempels 7, 8, 9, 10 über. Die Ringschultern können an der Unterseite der Kopfplatte 15 anliegen. Die Löcher in der Kopfplatte können durch chemisches Senken oder auch durch andere Bearbeitungsverfahren, wie Bohren, Schleifen und Drahterodieren hergestellt werden. Die Stanzstempel bzw. deren Rohlinge sind mit den Schaftfortsätzen 7a, 8a, 9, 10a in den Löchern gesichert. Sie können durch Kleben, Löten, Schweißen oder ähnliche Verfahren an der Kopfplatte befestigt sein.

Figur 13 veranschaulicht eine weitere abgewandelte Ausführungsform einer Kopfplatte 15 mit Stanzstempeln 7 bis 10. Die Stanzstempel 7, 8, 9, 10 sind gemäß Figur 13 wiederum fest mit der Kopfplatte 15 verbunden. Die Stanzstempel 7 bis 10 sind an ihren oberen Enden ohne Kopf oder Fortsatz ausgebildet. In der Kopfplatte 15 sind Löcher vorgesehen, deren Querschnitt mit dem jeweiligen Schaftquerschnitt des Stempels 7, 8, 9, 10 übereinstimmt. Der Schaftquerschnitt ist vorzugsweise ein Kreisquerschnitt oder ein Rechteckquerschnitt, je nachdem ob zur Herstellung des Stanzstempels ein im Querschnitt runder oder rechteckiger Rohling Anwendung gefunden hat. Die Löcher in der Kopfplatte 15 können wiederum durch chemisches Senken oder auch durch andere Bearbeitungsverfahren, wie Bohren, Schleifen und Drahterodieren hergestellt werden. Die Stanzstempel bzw. deren Rohlinge sind mit den oberen Enden ihrer Schäfte in den Löchern gesichert. Die Stempel 7, 8, 9, 10 können wie dargestellt an ihrer oberen Stirnseite bündig mit der Kopfplatte abschließen. Es ist auch möglich, die obere Stirnfläche eines oder mehrerer Stempel 7, 8, 9, 10 unterhalb der oberen Fläche der Kopfplatte 15 zu positionieren, wie in Figur 12 anhand des Stanzstempels 10 veranschaulicht ist. Die Stempel 7, 8, 9, 10 können durch Kleben, Löten, Schweißen oder ähnliche Verfahren an der Kopfplatte befestigt sein.

Bei den Ausführungsformen nach Figur 12 und 13 kann es zweckmäßig sein, die Stempel 7, 8, 9, 10, wenn sie in die Kopfplatte eingeklebt sind, zur Durchführung der elektrochemischen Bearbeitung gesondert elektrisch zu kontaktieren. Dies kann zur Erzielung einer verbesserten Oberflächenqualität genutzt werden. Die Sicherung der Stempel 7, 8, 9, 10 durch Klebeverbindung, insbesondere gemäß Figur 13, wird als besonders vorteilhaft angesehen. Die Klebeverbindung hat eine gewisse Dämpfungswirkung.

Ein erfindungsgemäßes Stanzwerkzeug 1 oder auch ein Folgeverbundwerkzeug weisen zumindest einen oder auch mehrere Stempel 7, 8, 9 auf, die an ihrem Arbeitsabschnitt 32, 33, 34 eine durch elektrochemisches Abtragen erzeugte Querschnittskontur aufweisen. Vorzugsweise sind die in dem Unterwerkzeug 3 ausgebildeten Stanzöffnungen 28, 29, 30 ebenfalls durch elektrochemisches Abtragen erzeugt worden. Für die Herstellung der Stempel 7, 8, 9 und der als Unterwerkzeug 3 z.B. dienenden Schnittplatte 27 werden gesonderte unterschiedliche spezifisch gestaltete Elektroden 62, 64 verwendet. Dies ermöglicht die Bewegung des Elektrolyts mit hoher Geschwindigkeit bzw. hohem Druck und die Erzeugung hoher Abtragraten sowie gleichzeitig ausgezeichneter Materialoberflächen.

### Bezugszeichen

- 1, 1a: Stanzwerkzeug
- 1b, 1c: Folgeverbundwerkzeug (ausschnittsweise)
- 2: oberer Werkzeugteil/Oberwerkzeug
- 3: unterer Werkzeugteil/Unterwerkzeug
- 4, 5: Führungen
- 6: Blechband
- 7-10: Stempel
- 11-14: Köpfe
- 15,15a,15b: Kopfplatte
- 16-19: Schäfte
- 16a: Querschnittskontur
- 20-23: Führungsbuchsen
- 24: Abstreifplatte
- 25, 26: Federmittel
- 27: Schnittplatte
- 28-31: Stanzöffnungen
- 32-35: Arbeitsabschnitte
- 32a-35a: Querschnittskonturen
- 36: Führungsnut
- 37: Stufe
- 38,39,40: Bezugsfläche
- 41,42,43: Anlagefläche
- 44: Bolzen
- 45, 46, 47, 48: Fortsätze
- 49, 50, 51, 52: Vertiefungen
- 53, 54, 55, 56: Bolzen
- 57, 58, 59, 60: Stirnflächen
- 61: Halter
- 62: Elektrode
- 63: Ecke
- d1, d2, d3, d4: Spaltweiten
- 64, 64': Stempel
- 65: Flansch
- 66: Ecke
- 67: Absatz

## Patentansprüche

1. Werkzeug (1, 1a, 1b, 1c),
mit einem Unterwerkzeug (3), das wenigstens eine Stanzöffnung (28) mit einer Schnittkontur aufweist,
mit einer Kopfplatte (15),
mit wenigstens einem Stanzstempel (7), der an der Kopfplatte (15) gehalten ist und der einen Schaftabschnitt (16) mit einer ersten Querschnittskontur (16a) und einen sich an diesen nahtlos unmittelbar anschließenden Arbeitsabschnitt (32) mit einer zweiten Querschnittskontur (32a) aufweist, die sich voneinander unterscheiden,
wobei die Querschnittskontur (32a) des Arbeitsabschnitts (32) durch ein elektrochemisches Abtrageverfahren erzeugt ist.

2. Werkzeug nach Anspruch 1, **dadurch gekennzeichnet, dass** die Querschnittskontur (16a) des Schafts (16) und die Querschnittskontur (32a) des Arbeitsteils in unterschiedlichen Herstellungsverfahren erzeugt sind.

3. Werkzeug nach Anspruch 1, **dadurch gekennzeichnet, dass** der Stanzstempel (7) an seiner von dem Arbeitsabschnitt (32) weg weisenden Seite eine Bezugsfläche (38) aufweist.

4. Werkzeug nach Anspruch 3, **dadurch gekennzeichnet, dass** die Kopfplatte (15) für die Bezugsfläche (38) des Stanzstempels (7) eine Anlagefläche (41) aufweist, die komplementär zu der Bezugsfläche (38) aufgebildet ist.

5. Werkzeug nach Anspruch 4, **dadurch gekennzeichnet, dass** die Anlagefläche (41) und die Bezugsfläche (38) ebene Flächen oder zueinander passende Formflächen (45, 49) beinhalten.

6. Werkzeug nach Anspruch 5, **dadurch gekennzeichnet, dass** mindestens eine der Formflächen (45, 49) durch elektrochemisches Abtragen erzeugt ist.

7. Werkzeug nach Anspruch 4, **dadurch gekennzeichnet, dass** der Stanzstempel (7) eine axiale Befestigungsbohrung zur Verankerung eines Befestigungsmittels (44) aufweist, mittels dessen die Bezugsfläche (38) des Stanzstempels (7) gegen die Anlagefläche (41) der Kopfplatte (15) spannbar ist.

8. Werkzeug nach Anspruch 1, **dadurch gekennzeichnet, dass** zwischen der Kopfplatte (15) und dem Unterwerkzeug (3) eine Abstreifplatte (24) angeordnet ist, die mindestens eine Durchgangsöffnung (20, 24a) aufweist, durch die sich der Schaft (16) des Stanzstempels (7) erstreckt.

9. Werkzeug nach Anspruch 1, **dadurch gekennzeichnet, dass** die Durchgangsöffnung (20) eine an die Querschnittskontur (16a) des Schafts (16) angepasste Form aufweist, wodurch der Schaft (16) des Stanzstempels (7) in der Durchgangsöffnung (20) im Gleitsitz geführt ist.

10. Werkzeug nach Anspruch 1, **dadurch gekennzeichnet, dass** die Durchgangsöffnung (24a) eine derartige Größe aufweist, dass sich der Stanzstempel (7) berührungslos durch die Durchgangsöffnung (24a) erstreckt.

11. Werkzeug nach Anspruch 1, **dadurch gekennzeichnet, dass** das Unterwerkzeug (3) mindestens eine Stanzöffnung (28) aufweist, die durch elektrochemisches Abtragen hergestellt ist und mit die mit dem Arbeitsabschnitt (32) einen Schneidspalt festlegt.

12. Verfahren zur Herstellung eines Werkzeugs (1) mit folgenden Schritten:
- Bereitstellen eines Stempelrohlings mit einer einheitlichen ersten Querschnittskontur (16a),
- Befestigen des Stempelrohlings an einer Halterung (61),
- Erzeugen des Arbeitsabschnitts (32) mit einer zweiten Querschnittskontur (32a) an einem freien Ende des Stempelrohlings durch chemisches Abtragen mit einem Stempel-Abtragewerkzeug (62),
- Bereitstellen eines Unterwerkzeugrohlings,
- Befestigen des Unterwerkzeugrohlings an einer Halterung,
- Einbringen der Stanzöffnung (28) in das Unterwerkzeug (3) durch elektrochemisches Abtragen mit einem Unterwerkzeug-Abtragewerkzeug (64).

13. Verfahren nach Anspruch 12, **dadurch gekennzeichnet, dass** in einem gesonderten Arbeitsschritt durch elektrochemisches Abtragen an dem Sempel (7) eine Bezugsfläche (38) und/oder ein Formfortsatz (45) und an der Kopfplatte (15) durch elektrochemisches Abtragen eine Anlagefläche (38) und oder eine zu dem Formfortsatz (45) komplementäre Ausnehmung (49) erzeugt werden.

14. Verfahren nach Anspruch 12, **dadurch gekennzeichnet, dass** die Halterung (61) zur Befestigung und Lagerung des Sempelrohlings während des elektrochemischen Abtragens die Kopfplatte (15) ist.

15. Verfahren nach Anspruch 14, **dadurch gekennzeichnet, dass** die Kopfplatte (15) mit mehreren Stanzstempelrohlingen versehen ist, deren Arbeitsabschnitte (32, 33, 34, 35) an den freien Enden der Stanzstempelrohlinge durch chemisches Abtragen gleichzeitig mit nur einer flächenhaften, ebenen Elektrode (62) erzeugt werden.
